# EUROPEAN PATENT APPLICATION

(11) **EP 2 829 374 A1**
(43) Date of publication of application: **28.01.2015**
(21) Application number: 13763990.2
(22) Date of filing: 18.03.2013
(51) Int. Cl.: B29B 11/14, B29B 9/12

(54) **PLASTIC, FOR AUTOMOTIVE INTERIOR PARTS, MANUFACTURED FROM BIOMASS PELLETS, AND METHOD FOR MANUFACTURING THE PLASTIC**

(30) Priority: 19.03.2012 KR 20120027594; 24.10.2012 KR 20120118710
(71) Applicant: SH Global Co. Ltd., Iksan-si, Jeollabuk-do 570-998 (KR); Ryu, Seung Hoon, Incheon 406-764 (KR)
(72) Inventor: RYU, Seung Hoon, Incheon 406-764 (KR); PARK, Jun Hong, Iksan-si Jeollabuk-do 570-813 (KR); RYU, Seung Yeon, Seoul 135-080 (KR)
(74) Representative: Regimbeau
(86) International application number: PCT/KR2013/002194
(87) International publication number: WO 2013/141548

(57) **Abstract**

The present disclosure relates to a plastic article for automotive interior parts using a biomass pellet and to a method for manufacturing the plastic article, which is characterized by injection molding a pellet containing paper powder and plastic resin. The present disclosure provides a plastic article for automotive interior parts using a biomass pellet, which meets the physical property requirements for automotive interior parts.

## Description

### [Technical Field]

The present disclosure relates to a plastic article for automotive interior parts and a method for manufacturing the same. More particularly, the disclosure relates to a plastic for automotive interior parts using a biomass pellet, which has physical properties suitable for use as a plastic article for automotive interior parts, and a method for manufacturing the same.

### [Background Art]

Globally, the plastic industry is continuing to make progress with the development of numerous polymer materials exhibiting superior performance. As more than 100 million tons of plastics are synthesized and used, the amount of plastic waste is also increasing exponentially.

Since general plastic materials have stable molecular structures, it is difficult to break the bonds and, even when they are broken, bonding tends to be formed again. For this reason, about 300-400 years are required for degradation of the plastic materials. As a result, soil pollution, scarcity of landfills, etc. are becoming severe problems.

In addition, air pollution resulting from the toxic gases and carbon dioxide produced during the burning of the plastics accelerates global warming.

Despite these problems, plastics are still used for automotive interior parts. Considering that about 57 million cars were produced in 2010, a considerably large amount of plastics are used as automotive interior parts.

Ecofriendly plastics such as biodegradable plastics, bio-based plastics, etc. are disclosed for example in Korean Patent Registration No. 1996-0008117 (Polyolefin-vegetable fiber molding resin composition) and Korean Patent Registration No. 10-0443275 (Biodegradable resin composition for extrusion and injection molding).

Since plastics manufactured from modified starch exhibit poor physical properties such as tensile and elongation properties, thermoplastic starch prepared by plasticization under high temperature and high pressure or polylactic acid (PLA) processed through starch fermentation and polymerization is used in practical applications. However, they do not meet the physical property requirements for automotive interior parts either. At present, only sample preparation is possible and large-scale production is difficult.

### [References of the Related Art]

### Patent Documents

(Patent document 1) KR1996-0008117 B1
(Patent document 2) abKR10-0443275 B1

### [Disclosure]

### [Technical Problem]

The present disclosure is directed to providing a plastic for automotive interior parts using a biomass pellet, which meets the physical property requirements for automotive interior parts.

### [Technical Solution]

In an aspect, the present disclosure provides a plastic article for automotive interior parts using a biomass pellet, which is prepared by injection molding a pellet containing a paper powder and a plastic resin.

Preferably, the pellet may further contain a plant powder.

Preferably, the pellet may contain 5-50 wt% of the paper powder and 50-95 wt% of the plastic resin based on total weight

Preferably, the pellet may contain 5-45 wt% of the paper powder, 5-20 wt% of the plant powder and 45-75 wt% of the plastic resin based on total weight.

Preferably, the plant of the plant powder is one or more plant(s) selected from a group consisting maize, bamboo and rice hull.

Preferably, the plastic resin may include one or more selected from polypropylene (PP), acrylonitrile butadiene styrene (ABS), polycarbonate-acrylonitrile butadiene styrene (PC-ABS), polyamide 6 (PA6) and polyamide 66 (PA66).

Preferably, the pellet may further contain an organic acid and peroxide.

Preferably, the pellet may further contain a graft binder and the graft binder may be contained in an amount of 0.5-2 wt% based on the total weight of the pellet.

In another aspect, the present disclosure provides a method for manufacturing a plastic article for automotive interior parts using a biomass pellet, including: (a) preparing a paper powder by pulverizing and drying paper; (b) preparing a plant powder by pulverizing and drying a plant; (c) forming a biomass powder by mixing the paper powder and the plant powder; (d) coating the biomass powder with a wax; (e) forming a mixture by mixing the wax-coated biomass powder with a plastic resin, an organic acid and peroxide; (f) forming a plastic resin-biomass graft binding composition from the mixture through graft binding between the plastic resin and the biomass; and (g) preparing the plastic resin-biomass graft binding composition into a pellet.

Preferably, the paper powder may be 100-400 mesh.

Preferably, the plant powder may be 100-300 mesh.

### [Advantageous Effects]

A plastic for automotive interior parts formed from a biomass pellet according to the present disclosure meets the physical property requirements for a plastic for automotive interior parts and is durable for 20-30 years.

The present disclosure is also advantageous in that recycling is easy using the biomass pellet, carbon dioxide emission can be reduced and the plastic is highly biodegradable after the disposal of waste.

### [Best Mode]

Hereinafter, a plastic for automotive interior parts using a biomass pellet according to the present disclosure is described in detail.

A plastic article for automotive interior parts using a biomass pellet according to an embodiment of the present disclosure is formed by injection molding a pellet containing a paper powder and a plastic resin.

Preferably, the paper powder may be contained in an amount of 5-50 wt%, although not being limited thereto.

The plastic resin may be one or more selected from polypropylene (PP), acrylonitrile butadiene styrene (ABS), polycarbonate-acrylonitrile butadiene styrene (PC-ABS), polyamide 6 (PA6) and polyamide 66 (PA66). Preferably, the plastic resin may be contained in an amount of 50 wt%-95 wt% based on the total weight of the pellet, although not being limited thereto.

A plastic article for automotive interior parts using a biomass pellet according to another embodiment of the present disclosure is formed by injection molding a pellet containing a paper powder, a plant powder and a plastic resin.

Preferably, the content of the paper powder may be 10-35 wt% based on the total weight of the pellet, although not being limited thereto.

The plant of the plant powder is one or more plant(s) selected from the group consisting maize, bamboo and rice hull. Preferably, the content of the plant powder may be 5-35 wt% based on the total weight of the pellet, although not being limited thereto.

The plastic resin may be one or more selected from polypropylene (PP), acrylonitrile butadiene styrene (ABS), polycarbonate-acrylonitrile butadiene styrene (PC-ABS), polyamide 6 (PA6) and polyamide 66 (PA66). Preferably, the content of the plastic resin may be 45-75 wt% based on the total weight of the pellet, although not being limited thereto.

Preferably, the biomass pellet may further contain an organic acid and peroxide.

The organic acid may be one or more acid(s) selected from a group consisting of citric acid, malic acid, maleic acid and acetic acid. Preferably, the content of the organic acid may be 0.2-5 wt% based on the total weight of the pellet, although not being limited thereto.

Preferably, the content of the peroxide may be 0.01-5.0 wt% based on the total weight of the pellet, although not being limited thereto.

Preferably, the biomass pellet may further contain a graft binder.

Preferably, the content of the graft binder may be 0.5-2 wt% based on the total weight of the pellet, although not being limited thereto.

### Description of manufacturing method

Hereinafter, a method for manufacturing the plastic article using a plastic composition for automotive interior parts using a biomass pellet according to the present disclosure is described in detail.

In step (a), a paper powder is prepared by pulverizing and drying paper. Preferably, the paper may be pulverized into ultrafine powder of about 100-400 mesh. If the mesh size is smaller than 100 mesh, the particle size is too large, resulting in decreased pellet productivity due to poor flow property, unsatisfactory quality of the final product such as film due to rough surface, and unsatisfactory strength and elongation of the product. Additionally, if the mesh size exceeds 400 mesh, it takes too long a time for the pulverization, resulting in decreased overall productivity and price competitiveness issues following increased production cost.

Then, in step (b), a plant powder is prepared by pulverizing and drying a plant. Preferably, the plant may also be pulverized into ultrafine powder of about 100-300 mesh. As with the paper powder, if the mesh size is smaller than 100 mesh, the particle size is too large, resulting in decreased pellet productivity due to poor flow property, unsatisfactory quality of the final product such as film due to rough surface, and unsatisfactory strength and elongation of the product. Additionally, if the mesh size exceeds 300 mesh, it takes too long a time for the pulverization, resulting in decreased overall productivity and price competitiveness issues following increased production cost.

In step (c), a biomass powder is formed by mixing the paper powder prepared in step (a) with the plant powder prepared in step (b).

In step (d), the biomass powder formed in step (c) is coated with a wax. A wax is added to the biomass powder which was formed through step (a) and step (b) and then dried, and a wax-coated biomass powder is formed by stirring at high speed. The wax melts by the heat generated during the stirring at high speed and is coated on the surface of the plant powder. The wax-coated biomass powder is prevented from reabsorbing moisture.

Since the wax advantageously has a small molecular weight and a low melting point, it can serve as a lubricant aid during extrusion. It is also advantageous in that it is biodegradable.

In step (e), a mixture is formed by mixing the wax-coated biomass powder formed in step (d) with a plastic resin which serves as a binder, an organic acid and peroxide.

The peroxide serves to chemically break the chains of the plastic resin.

The organic acid serves as an intermediate to bind the biomass powder to the terminal groups of the plastic resin cut by the peroxide and also as an agent of oxidative dissolution.

In step (e), a graft binder may be further added in addition to the biomass powder, the plastic resin, the organic acid and the peroxide.

The graft binder serves to help graft binding between the plastic resin and the biomass powder.

In step (f), a plastic resin-biomass graft binding composition is formed from the mixture formed in step (e) through graft binding between the plastic resin and the biomass by reacting in an extruder at 100-300 °C.

If the reaction temperature is below 100 °C, reaction cannot occur because the added materials are not melted. Additionally, if the reaction temperature is above 300 °C, carbonization may occur or preparation of a pellet may be impossible as the plastic resin is melted and flows like water.

In step (g), a pellet is prepared by discharging the plastic resin-biomass graft binding composition formed in step (f) through a discharge port, blow drying the discharged strand while transferring using a conveyor belt and then cutting by, for example, Die-face hot cutting.

The biomass pellet that went through the above-mentioned steps may be injection molded to prepare a plastic article for automotive interior parts.

### <Comparative Example>

A plastic resin containing 80.0 wt% of polypropylene (PP) and 20.0 % of talc.

### <Example 1>

A plastic article for automotive interior parts was prepared by injection molding a pellet prepared by adding 49 wt% of polypropylene (PP), 1.0 wt% of calcium stearate, 0.2 wt% of an antioxidant and 3.0 wt% of titanium oxide to 46.8 wt% of a paper powder pulverized to 300 mesh.

### <Example 2>

A plastic article for automotive interior parts was prepared by injection molding a pellet prepared by adding 63.3 wt% of polypropylene (PP), 1.0 wt% of calcium stearate, 0.2 wt% of an antioxidant, 3.0 wt% of titanium oxide and 2.5 wt% of a graft binder (GB-MA) to 30.0 wt% of a 300-mesh paper powder.

### <Example 3>

A plastic article for automotive interior parts was prepared by injection molding a pellet prepared by adding 53.3 wt% of polypropylene (PP), 10.0 wt% of an ethylene propylene diene monomer (EPDM), 1.0 wt% of calcium stearate, 0.2 wt% of an antioxidant, 3.0 wt% of titanium oxide and 2.5 wt% of a graft binder (GB-MA) to 30.0 wt% of a 300-mesh paper powder.

### <Example 4>

A plastic article for automotive interior parts was prepared by injection molding a pellet prepared by adding 63.3 wt% of polypropylene (PP), 1.0 wt% of calcium stearate, 0.2 wt% of an antioxidant, 3.0 wt% of titanium oxide and 2.5 wt% of a graft binder (GB-MA) to 25.0 wt% of a 300-mesh paper powder and 5.0 wt% of a cornhusk powder.

### <Example 5>

A plastic article for automotive interior parts was prepared by injection molding a pellet prepared by adding 63.3 wt% of polypropylene (PP), 1.0 wt% of calcium stearate, 0.2 wt% of an antioxidant, 3.0 wt% of titanium oxide and 2.5 wt% of a graft binder (GB-MA) to 20.0 wt% of a 300-mesh paper powder and 10.0 wt% of a cornhusk powder.

### <Test Example 1>

Flexural modulus of the plastic articles for automotive interior parts prepared in the Comparative Example and Examples 1-5 was measured according to the method of IS0178.

### <Test Example 2>

Flexural strength of the plastic articles for automotive interior parts prepared in the Comparative Example and Examples 1-5 was measured according to the method of IS0178.

### <Test Example 3>

Tensile strength of the plastic articles for automotive interior parts prepared in the Comparative Example and Examples 1-5 was measured according to the method of IS0527-1.

The result of Test Examples 1-3 is summarized in Table 1.

**[Table 1]**

| | Test method | Requirement | Comp. Ex. | Ex. 1 | Ex. 2 | Ex. 3 | Ex. 4 | Ex. 5 |
|---|---|---|---|---|---|---|---|---|
| Flexural modulus (MPa) | ISO178 | Mean value: 1700 | 1474 | 3307 | 2197 | 1847 | 1786 | 1720 |
| | | Range: 1500-1900 | | | | | | |
| Flexural strength (MPa) | ISO178 | - | 26.09 | 36.18 | 37.85 | 32.85 | 30.65 | 29.85 |
| Tensile strength (MPa) | ISO527-1 | ≥17 | 20.37 | 24.81 | 20.8 | 18.8 | 17.9 | 17.2 |

As seen from Table 1, the plastic articles for automotive interior parts using biomass pellets according to the present disclosure, i.e. the plastic compositions containing a paper powder (Examples 1-3) and the plastic compositions containing a paper powder and a plant (cornhusk) powder (Examples 4-5), showed comparable or better flexural modulus, flexural strength and tensile strength as compared to the polypropylene of the Comparative Example.

Although specific exemplary embodiments of the present disclosure were described above, the present disclosure is not limited to the specific embodiments. Those of ordinary skill in the art to which the present disclosure belongs will appreciate that various changes and modifications can be made to the present disclosure without departing from the technical idea and scope of the attached claims. Those skilled in the art will also appreciate that such changes and modifications and their equivalents fall within the scope of the present disclosure.

## Claims

1. A plastic article for automotive interior parts using a biomass pellet, which is prepared by injection molding a pellet comprising a paper powder and a plastic resin.

2. The plastic article according to claim 1, wherein the pellet further comprises a plant powder.

3. The plastic article according to claim 1, wherein the pellet comprises 5-50 wt% of the paper powder and 50-95 wt% of the plastic resin based on total weight.

4. The plastic article according to claim 2, wherein the pellet comprises 5-45 wt% of the paper powder, 5-20 wt% of the plant powder and 45-75 wt% of the plastic resin based on total weight.

5. The plastic article according to claim 2, wherein the plant is one or more plant(s) selected from the group consisting of maize, bamboo and rice hull.

6. The plastic article according to claim 1 or claim 2, wherein the plastic resin comprises one or more selected from polypropylene (PP), acrylonitrile butadiene styrene (ABS), polycarbonate-acrylonitrile butadiene styrene (PC-ABS), polyamide 6 (PA6) and polyamide 66 (PA66).

7. The plastic article according to claim 1 or claim 2, wherein the pellet further comprises an organic acid and a peroxide.

8. The plastic article according to claim 1 or claim 2, wherein the pellet further comprises a graft binder and the graft binder is contained in an amount of 0.5-2 wt% based on the total weight of the pellet.

9. A method for manufacturing a plastic article for automotive interior parts using a biomass pellet, comprising: (a) preparing a paper powder by pulverizing and drying paper; (b) preparing a plant powder by pulverizing and drying a plant; (c) forming a biomass powder by mixing the paper powder and the plant powder; (d) coating the biomass powder with a wax; (e) forming a mixture by mixing the wax-coated biomass powder with a plastic resin, an organic acid and a peroxide; (f) forming a plastic resin-biomass graft binding composition from the mixture through graft binding between the plastic resin and the biomass; and (g) preparing the plastic resin-biomass graft binding composition into a pellet.

10. The method according to claim 9, wherein the paper powder is 100-400 mesh.

11. The method according to claim 9, wherein the plant powder is 100-300 mesh.
